# EUROPÄISCHE PATENTSCHRIFT

(11) **EP 1 236 038 B1**
(45) Veröffentlichungstag und Bekanntmachung des Hinweises auf die Patenterteilung: **23.11.2005**
(21) Anmeldenummer: 00954838.9
(22) Anmeldetag: 06.09.2000
(51) Int. Cl.: G01N 27/22

(54) **KAPAZITIVER SENSOR**
CAPACITIVE SENSOR
CAPTEUR CAPACITIF

(30) Priorität: 08.12.1999 CH 225199
(43) Veröffentlichungstag der Anmeldung: 04.09.2002
(73) Patentinhaber: Sensirion AG, 8052 Zürich (CH)
(72) Erfinder: MAYER, Felix, CH-8057 Zürich (CH); LECHNER, Moritz, CH-8057 Zürich (CH)
(74) Vertreter: Blum, Rudolf Emil
(86) Internationale Anmeldenummer: PCT/IB2000/001261
(87) Internationale Veröffentlichungsnummer: WO 2001/042776

(56) Entgegenhaltungen:
- WO-A-85/04718
- DE-A- 19 708 053
- DE-C- 3 923 595
- GB-A- 668 196
- GB-A- 2 159 956
- US-A- 4 347 550
- US-A- 4 429 343

## Beschreibung

### Hintergrund

Die Erfindung betrifft einen Sensor gemäss Oberbegriff von Anspruch 1 sowie ein Herstellungsverfahren für einen derartigen Sensor.

### Stand der Technik

Typische Beispiele für Sensoren dieser Art sind Feuchtesensoren. Diese weisen eine Polymer- oder Keramikschicht auf, die auf zwei Interdigital-Elektroden liegt. Die Dielektrizitätskonstante der Polymerschicht und somit auch die elektrische Kapazität zwischen den beiden Elektroden hängt vom Feuchtegehalt der Umgebungsluft ab. Somit kann über eine kapazitive Messung der Feuchtegehalt bestimmt werden.

In der Praxis zeigt es sich jedoch, dass Sensoren dieser Art Alterungsprozessen unterworfen sind. Das Signal bei festem zu messendem Parameter ändert sich über die Zeit. Dies macht nachträgliche Kalibrierungen notwendig und kann bis zur Unbrauchbarkeit der Sensoren führen.

### Darstellung der Erfindung

Es stellt sich deshalb die Aufgabe, einen Sensor der eingangs genannten Art bereitzustellen, der möglichst wenig den oben erwähnten Alterungsprozessen unterliegt.

Diese Aufgabe wird vom Sensor gemäss Anspruch 1 gelöst.

Erfindungsgemäss ist zwischen den Elektroden und der Messschicht eine Schutzschicht aus gasdichtem, nicht-oxidierendem Material angeordnet. Wie es sich zeigt, können damit Alterungsprozesse reduziert oder sogar verhindert werden. Es wird angenommen, dass durch die Schutzschicht eine Oxidation der Elektroden verhindert wird.

Die Erfindung ist besonders Wirkungsvoll mit Elektroden aus Aluminium, oder Elektroden aus einem anderen, leicht oxidierbarem Material, wie z.B. Kupfer, Titan, Wolfram oder Polysilizium. Aluminium ist aber besonders bevorzugt, da es sich zur Herstellung mittels lithographischer Verfahren auf Halbleiterchips eignet.

Die Schutzschicht kann aus einem Edelmetall bestehen, wie z.B. Gold, oder aus einem nicht-oxidierenden Dielektrikum, insbesondere Siliziumoxid oder Siliziumnitrid. Edelmetalle und insbesondere Gold haben den Vorteil, dass sie sich zur gezielten galvanischen Ablagerung auf den Elektroden eignen. Für eine besonders gute Abdichtung sind auch kombinierte Schichten aus Gold und darauf abgelagertem, nicht-oxidierendem Dielektrikum möglich.

In einer bevorzugten Ausführung besteht der Sensor aus einem Halbleiterchip, in welchem eine Öffnung angeordnet ist. Die Öffnung wird von einer Membran überspannt, und die Messschicht ist an der Membran angeordnet. Dies erlaubt es, die Temperatur der Messschicht besser zu kontrollieren, insbesondere wenn ein geeignetes Heizelement vorgesehen ist. Vorzugsweise wird die Messschicht an der Innenseite der Membran angeordnet, so dass die Aussenseite und somit die Schaltungsseite des Halbleiterchips vom zu messenden Medium getrennt werden kann.

Die Erfindung eignet sich insbesondere für Feuchtesensoren, Gassensoren, etc.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Draufsicht auf einen Sensor mit gestrichelt eingezeichneter Messschicht,
Fig. 2 einen Schnitt durch eine erste Ausführung des Sensors von Fig. 1,
Fig. 3 einen Schnitt durch eine zweite Ausführung des Sensors von Fig. 1,
Fig. 4 einen Schnitt durch eine Ausführung des Sensors mit unten liegender Messschicht und
Fig. 5 ein Detail aus Fig. 4.

### Wege zur Ausführung der Erfindung

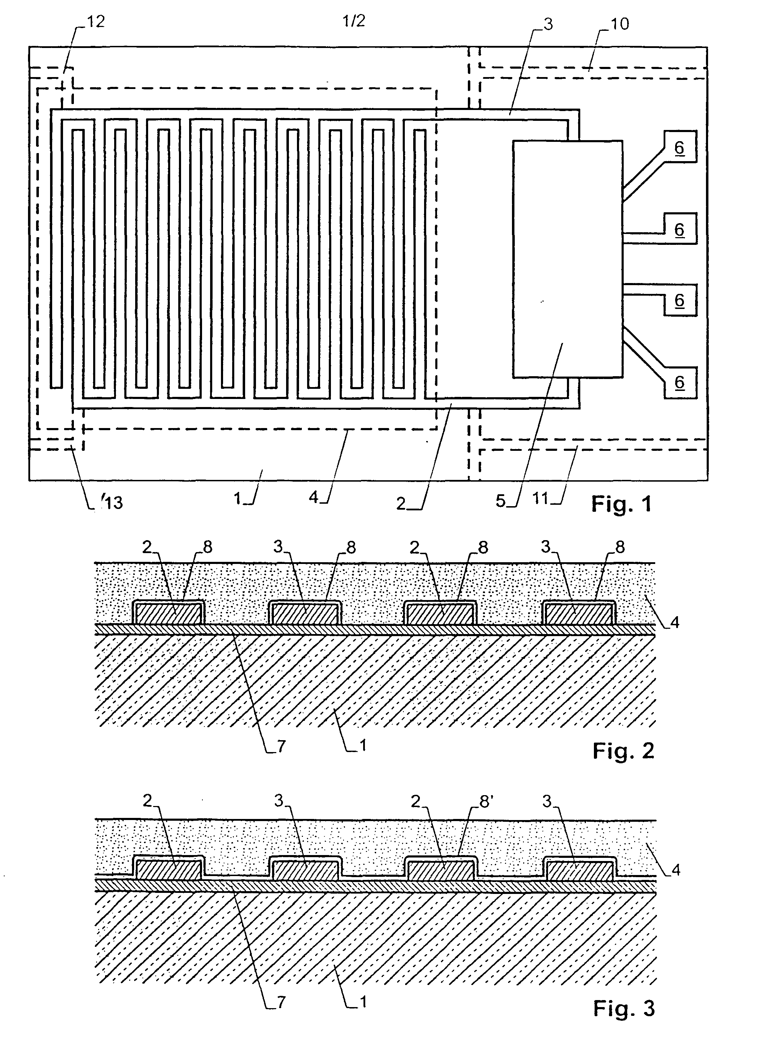

Der in Fig. 1 dargestellte Sensor ist als Feuchtesensor ausgestaltet. Er besitzt einen Halbleiterchip 1 als Substrat, auf dem in bekannter Weise zwei Interdigital-Elektroden 2, 3 angeordnet sind. Sie bilden ein Messfeld, auf welchem eine Messschicht 4 liegt, welche in der vorliegenden Ausführung aus einem Polymer oder einer Keramik besteht. Eine auf dem Halbleiterchip 1 integrierte Messschaltung 5 dient zum Messen der Kapazität zwischen den Elektroden 2, 3. Zum Anschluss des Sensors sind geeignete Anschlusspads 6 vorgesehen.

Die Elektroden 2, 3 bestehen vorzugsweise aus Aluminium, da dieses in bekannten Prozessen auf den Halbleiterchip 1 aufgebracht werden kann. Es sind jedoch z.B. auch Elektroden aus Kupfer, Polysilizium, Wolfram oder Titan denkbar.

Die Messschicht 4 ist so ausgestaltet, dass sie Feuchtigkeit aus der Umgebung aufnimmt. Ihre Dielektrizitätskonstante, und somit die Kapazität zwischen den Elektroden 2, 3, ist deshalb abhängig von der Umgebungsfeuchte. Durch die Kapazitätsmessung kann also die Feuchte der Umgebung gemessen werden.

Fig. 2 zeigt den Aufbau einer ersten Ausführung der Erfindung im Detail. Wie hier ersichtlich, liegen die Elektroden 2, 3 auf einer Isolationsschicht 7, welche aus Siliziumoxid besteht und die Elektroden elektrisch vom Halbleiterchip 1 isoliert. Ausserdem ist jede Elektrode 2, 3 einzeln von einer Schutzschicht 8 umgeben, welche in diesem Fall aus Gold oder einem anderen Edelmetall besteht, welches unter normalen Messbedingungen nicht (oder viel langsamer als die Elektroden) oxidiert und gasdicht, d.h. nicht durchlässig für Sauerstoff, ist.

Die Schutzschicht 8 trennt die Elektroden 2, 3 von der Messschicht 4 und verhindert deren Oxidation. Dadurch werden Alterungserscheinungen vermieden.

Bei der Herstellung des Sensors werden zuerst die Elektroden 2, 3 auf die Isolationsschicht 7 aufgebracht. Sodann werden die Elektroden 2, 3 galvanisch mit Gold bzw. einem anderen Edelmetall beschichtet. Hierzu wird ein ganzer Halbleiter-Waver mit mehreren Halbleiterchips in ein geeignetes galvanisches Bad eingebracht. Die Elektroden werden elektrisch vorgespannt, damit an ihrer Oberfläche die Schutzschicht 8 ausgebildet wird. Für diesen Zweck können die Elektroden 2, 3 aller Halbleiterchips 1 über geeignete Hilfsleitungen 10 - 13 elektrisch miteinander verbunden sein. Diese Hilfsleitungen werden beim Auseinandersägen der Halbleiterchips 1 getrennt.

Anstelle einer Schutzschicht 8 aus Edelmetall, oder zusätzlich zu einer solchen Schutzschicht, kann eine Schutzschicht 8' aus einem dichten, nicht-oxidierenden Dielektrikum vorgesehen sein, z.B. aus Siliziumoxid oder Siliziumnitrid. Siliziumoxid ist bevorzugt, da es sehr dicht ist und sich ausserdem mit bekannten Methoden in einfacher Weise aufbringen lässt.

Typische Dicken der Schutzschicht 8 bzw. 8' liegen zwischen 1 und 100 nm. Wie Fig. 3 zeigt, kann bei Verwendung einer elektrisch nicht leitenden Schutzschicht 8' das ganze Messfeld, d.h. auch die Bereiche zwischen den Elektroden 2, 3, mit der Schicht bedeckt sein.

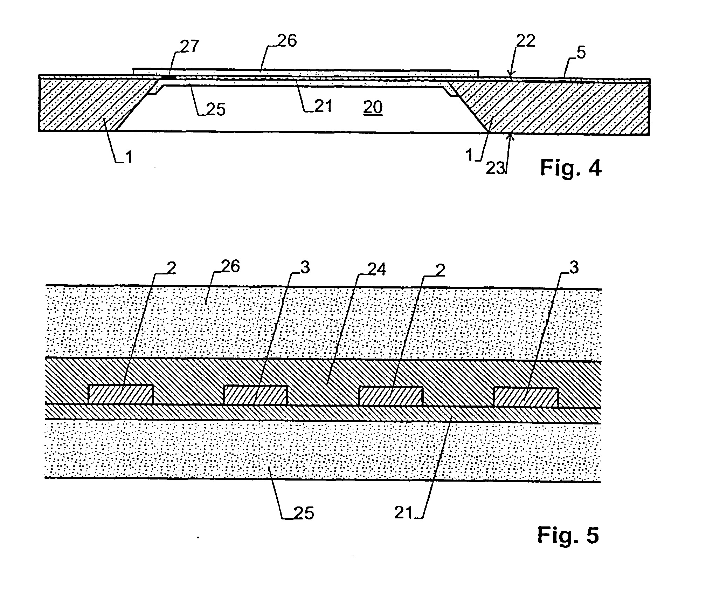

Eine weitere Ausführung der Erfindung wird in Fig. 4 und 5 dargestellt. Hier ist im Halbleiterchip 1 eine Öffnung 20 ausgespart worden. Diese Öffnung 20 wird von einer Membran 21 überdeckt, welche z.B. aus Siliziumoxid besteht. Eine derartige Anordnung kann hergestellt werden, indem zuerst eine Siliziumoxid-Schicht auf die Oberseite 22 des Halbleiterchips 1 aufgetragen und sodann die Öffnung 20 von der Unterseite 23 her anisotrop ausgeätzt wird.

Auf der Membran 21 sind die Elektroden 2, 3 angeordnet. Sie sind von einer weiteren isolierenden Schicht 24, z.B. aus Siliziumoxid, bedeckt. Eine erste Polymerschicht 25 (oder eine Schicht aus einem anderen geeigneten Messmaterial) liegt von unten an der Membran 21 an. Eine zweite Polymerschicht 26 liegt auf der isolierenden Schicht 24. Die beiden Polymerschichten 25, 26 besitzen im wesentlichen die gleichen thermischen Ausdehnungseigenschaften. Auf diese Weise können mechanische Spannungen in der Membran 21 vermieden werden.

Sowohl Polymerschicht 25 als auch Polymerschicht 26 können als Messschichten dienen. Die Verwendung der unteren Polymerschicht 25 als Messschicht ist jedoch bevorzugt. In diesem Fall kann die Membran 21, sofern sie die Öffnung 20 völlig bedeckt, als Barriere zwischen dem sich in Öffnung 20 befindlichen, zu messenden Medium und der Oberseite 22 des Halbleiterchips 1 dienen. Auf diese Weise wird die integrierte Schaltung 5 auf der Oberseite 22 des Halbleiterchips 1 vom Einfluss des zu messenden Mediums geschützt.

Die Anordnung gemäss Fig. 4 und 5 hat den Vorteil, dass die Temperatur der Messschicht schnell und einfach geregelt werden kann, da sie vom Halbleiterchip thermisch isoliert ist. Zu diesem Zweck ist ein Heizelement 27 vorgesehen, welches in Fig. 4 nur schematisch dargestellt ist und sich vorzugsweise möglichst über die ganze Membran erstreckt.

In der Praxis zeigt es sich, dass die hier beschriebenen Sensoren genaue und über lange Zeit stabile Messresultate erzeugen. Dies wird insbesondere der Schutzschicht 8, 8' bzw. 21 zugeschrieben, da diese verhindert, dass die Elektroden 2, 3 oxidieren.

Das hier beschriebene Konzept eignet sich nicht nur für Feuchtesensoren, sondern z.B. auch für andere Arten von Gassensoren, wie z.B. Alkohol- oder CO₂-Sensoren.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Sensor, insbesondere Feuchtesensor, umfassend eine Messschicht (4, 25), deren dielektrische Eigenschaften von einem zu messenden Parameter abhängen, einen Halbleiterchip (1) und auf dem Halbleiterchip (1) nebeneinander liegende Interdigitalelektroden (2, 3) zur kapazitiven Ausmessung der Messschicht (4, 25), **dadurch gekennzeichnet, dass** zwischen den Elektroden (2, 3) und der Messschicht (4, 25) eine Schutzschicht (8, 8', 21) aus gasdichtem, nicht-oxidierendem Material angeordnet ist.

2. Sensor nach Anspruch 1, **dadurch gekennzeichnet, dass** die Schutzschicht zwischen 1 und 100 nm dick ist.

3. Sensor nach einem der vorangehenden Ansprüche, **dadurch gekennzeichnet, dass** die Interdigitalelektroden (2, 3) aus Aluminium sind.

4. Sensor nach einem der Ansprüche 1 oder 2, **dadurch gekennzeichnet, dass** die Interdigitalelektroden (2, 3) aus Kupfer, Titan, Wolfram oder Polysilizium sind.

5. Sensor nach einem der vorangehenden Ansprüche, **dadurch gekennzeichnet, dass** die Schutzschicht (8, 8', 21) mindestens teilweise aus einem Edelmetall, insbesondere Gold, ist, und/oder, dass die Schutzschicht (8, 8', 21) mindestens teilweise aus einem nicht-oxidierenden Dielektrikum, insbesondere Siliziumoxid oder Siliziumnitrid besteht.

6. Sensor nach Anspruch 5, **dadurch gekennzeichnet, dass** die Schutzschicht (8, 8', 21) aus einer ersten Schicht aus Edelmetall und einer zweiten Schicht aus einem nicht-oxidierenden Dielektrikum besteht.

7. Sensor nach einem der vorangehenden Ansprüche, **dadurch gekennzeichnet, dass** im Halbleiterchip (1) eine Öffnung (20) angeordnet ist, welche von einer Membran (21) überspannt ist, wobei die Interdigitalelektroden (2, 3) auf oder in der Membran (21) angeordnet sind und die Messschicht (25) an der Membran (21) angeordnet ist.

8. Sensor nach Anspruch 7, **dadurch gekennzeichnet, dass** auf der der Messschicht (25) gegenüberliegenden Seite der Membran eine Ausgleichsschicht (26) angeordnet ist, wobei die Ausgleichsschicht (26) im wesentlichen gleiche thermische Ausdehnungseigenschaften wie die Messschicht (25) besitzt, und insbesondere dass die Ausgleichsschicht (26) aus dem gleichen Material wie die Messschicht (25) ist und im wesentlichen die gleiche Dikke wie die Messschicht (25) aufweist.

9. Sensor nach einem der Ansprüche 7 oder 8, **dadurch gekennzeichnet, dass** die Membran (21) aus einem Siliziumoxid oder Siliziumnitrid besteht.

10. Sensor nach einem der Ansprüche 7 - 9, **dadurch gekennzeichnet, dass** die Messschicht (25) an einer der Öffnung (20) zugewandten Innenseite der Membran (21) angeordnet ist und die Membran (21) die Schutzschicht bildet, und insbesondere dass die Membran (21) und eine Schaltung (5) auf einer ersten Seite (22) des Halbleiterchips (1) angeordnet sind, wobei die Membran (21) eine Barriere zwischen der ersten Seite (22) und der Öffnung (20) bildet, und/oder dass an der Membran (21) ein Heizelement (27) angeordnet ist.

11. Sensor nach einem der vorangehenden Ansprüche, **dadurch gekennzeichnet, dass** die Messschicht (4, 25) ein Polymer aufweist oder aus einem solchen besteht.

12. Sensor nach einem der vorangehenden Ansprüche, **dadurch gekennzeichnet, dass** er ein Feuchtesensor ist und die Dielektrizitätskonstante der Messschicht abhängig von der Umgebungsfeuchte ist.

13. Verfahren zur Herstellung eines Sensors nach einem der vorangehenden Ansprüche, bei welchem die Interdigitalelektroden (2, 3) auf den Halbleiterchip (1) aufgebracht werden, **dadurch gekennzeichnet, dass** die Schutzschicht (8, 8', 21) auf die Interdigitalelektroden (2, 3) aufgebracht und sodann die Messschicht (4, 25) aufgebracht wird.

14. Verfahren nach Anspruch 13, **dadurch gekennzeichnet, dass** die Schutzschicht (8, 8') durch galvanische Ablagerung eines Edelmetalls auf die Interdigitalelektroden (2, 3) aufgebracht wird.

## Claims

1. Sensor, in particular humidity sensor, comprising a measuring layer (4, 25) the dielectric properties of which depend on a parameter to be measured, a semiconductor chip (1) and interdigital electrodes (2, 3) lying on the semiconductor chip (1) side by side for capacitively measuring the measuring layer (4, 25), **characterized in that** a protective layer (8, 8', 21) of gas proof, non-oxidizing material is arranged between the electrodes (2, 3) and the measuring layer (4, 25).

2. Sensor of claim 1 **characterized in that** the protective layer has a thickness between 1 and 100 nm.

3. Sensor of any of the preceding claims **characterized in that** the interdigital electrodes (2, 3) are of aluminum.

4. Sensor of one of the claims 1 or 2, **characterized in that** the interdigital electrodes (2, 3) are of copper, titanium, tungsten or polysilicon.

5. Sensor of any of the preceding claims **characterized in that** the protective layer (8, 8', 21) consists at least partially of a noble metal, in particular gold, and/or that the protective layer (8, 8', 21) consists at least partially of a non-oxidizing dielectric, in particular silicone oxide.

6. Sensor of claim 5 **characterized in that** the protective layer (8, 8', 21) consists of a first layer of a noble metal and a second layer of a non-oxidizing dielectric.

7. Sensor of any of the preceding claims **characterized in that** an opening (20) spanned by a membrane (21) is arranged in the semiconductor.chip (1), wherein the interdigital electrodes (2, 3) are arranged on or within the membrane (21) and the measuring layer (25) is arranged at the membrane (21).

8. Sensor of claim 7 **characterized in that** a compensation layer (26) is arranged on a side of the membrane opposite to the measuring layer (25), wherein the compensation layer (26) has substantially the same thermal expansion properties as the measuring layer (25), and in particular that the compensation layer (26) is of the same material as the measuring layer (25) and has substantially the same thickness as the measuring layer (25).

9. Sensor of one of the claims 7 or 8 **characterized in that** the membrane (21) consists of silicon oxide or silicon nitride.

10. Sensor of any of the claims 7 - 9 **characterized in that** the membrane (25) is located on an inner side of the membrane (21) facing the opening (20) and the membrane (21) forms the protective layer, and in particular that the membrane (21) and a circuit (5) are arranged on a first side (22) of the semiconductor chip (1), wherein the membrane (21) forms a barrier between the first side (22) and the opening (20), and/or that a heating element (27) is arranged on the membrane (1).

11. Sensor of any of the preceding claims **characterized in that** the measuring layer (4, 25) comprises a polymer or consists of the same.

12. Sensor of any of the preceding claims **characterized in that** it is a humidity sensor and that the dielectric constant of the measuring layer depends on the environmental humidity.

13. Method for producing a sensor of any of the preceding claims in which the interdigital electrodes (2, 3) are arranged on the semiconductor chip (1), **characterized in that** the protective layer (8, 8', 21) is applied on the interdigital electrodes (2, 3) and then the measuring layer (4, 25) is applied.

14. Method of claim 13 **characterized in that** the protective layer (8 , 8') is applied on the interdigital electrodes (2, 3) by galvanic deposition of a noble metal.

## Revendications

1. Capteur, en particulier capteur d'humidité, comprenant une couche de mesure (4, 25) avec des caractéristiques diélectriques dépendant d'un paramètre à mesurer, une puce de semi-conducteur (1), et sur la puce de semi-conducteur (1), des électrodes interdigitales (2, 3), placées côte à côte pour la mesure capacitive de la couche de mesure (4, 25), **caractérisé en ce que**, entre les électrodes (2, 3) et la couche de mesure (4, 25), une couche protectrice (8, 8', 21) est disposée, constituée d'un matériau étanche aux gaz, non oxydant.

2. Capteur selon la revendication 1, **caractérisé en ce que** la couche protectrice a une épaisseur de 1 à 100 nm.

3. Capteur selon l'une des revendications précédentes, **caractérisé en ce que** les électrodes interdigitales (2, 3) sont en aluminium.

4. Capteur selon l'une des revendications 1 ou 2, **caractérisé en ce que** les électrodes interdigitales (2, 3) sont en cuivre, titane, tungstène ou polysilicium.

5. Capteur selon l'une des revendications précédentes, **caractérisé en ce que** la couche protectrice (8, 8', 21) est au moins partiellement constituée d'un métal précieux, en particulier l'or, et/ou **en ce que** la couche protectrice (8, 8', 21) est au moins partiellement constituée d'un diélectrique non oxydant, en particulier l'oxyde de silicium ou le nitrure de silicium.

6. Capteur selon la revendication 5, **caractérisé en ce que** la couche protectrice (8, 8', 21) est constituée d'une première couche en métal précieux et d'une deuxième couche en un diélectrique non oxydant.

7. Capteur selon l'une des revendications précédentes, **caractérisé en ce qu'**une ouverture (20) recouverte d'une membrane (21) est aménagée dans la puce de semi-conducteur (1), les électrodes interdigitales (2, 3) étant disposées sur ou dans la membrane (21) et la couche de mesure (25) étant agencée au niveau de la membrane (21).

8. Capteur selon la revendication 7, **caractérisé en ce que** sur le côté de la membrane situé à l'opposé de la couche de mesure (25), une couche d'aplanissement (26) est disposée, la couche d'aplanissement (26) possédant sensiblement les mêmes caractéristiques de dilatation thermique que la couche de mesure (25), et en particulier, **en ce que** la couche d'aplanissement (26) est constituée du même matériau que la couche de mesure (25) et possède sensiblement la même épaisseur que la couche de mesure (25).

9. Capteur selon l'une des revendications 7 ou 8, **caractérisé en ce que** la membrane (21) est constituée d'un oxyde de silicium ou de nitrure de silicium.

10. Capteur selon l'une des revendications 7-9, **caractérisé en ce que** la couche de mesure (25) est disposée sur un côté interne de la membrane (21) tourné vers l'ouverture (20), **en ce que** la membrane (21) constitue la couche protectrice, **en ce que**, en particulier, la membrane (21) et un circuit (5) sont disposés sur un premier côté (22) de la puce de semi-conducteur (1), ce par quoi la membrane (21) constitue une barrière entre le premier côté (22) et l'ouverture (20), et/ou **en ce qu'**un élément de chauffage (27) est disposé sur la membrane (21).

11. Capteur selon l'une des revendications précédentes, **caractérisé en ce que** la couche de mesure (4, 25) comporte un polymère ou est constituée par celui-ci.

12. Capteur selon l'une des revendications précédentes, **caractérisé en ce qu'**il est un capteur d'humidité et **en ce que** la constante diélectrique de la couche de mesure dépend de l'humidité de l'environnement.

13. Procédé pour la fabrication d'un capteur selon l'une des revendications précédentes, par lequel les électrodes interdigitales (2, 3) sont appliquées sur la puce de semi-conducteur (1), **caractérisé en ce que** la couche protectrice (8, 8', 21) est appliquée sur les électrodes interdigitales (2, 3) et que la couche de mesure (4, 25) est appliquée ultérieurement.

14. Procédé selon la revendication 13, **caractérisé en ce que** la couche protectrice (8, 8') est appliquée par dépôt galvanique d'un métal précieux sur les électrodes interdigitales (2, 3).
